# EUROPÄISCHE PATENTANMELDUNG

(11) **EP 1 376 589 A1**
(43) Veröffentlichungstag der Anmeldung: **02.01.2004**
(21) Anmeldenummer: 03014153.5
(22) Anmeldetag: 24.06.2003
(51) Int. Cl.: G11B 33/04, A47B 81/06

(54) **Ständer für Datenträger-Kassetten**

(30) Priorität: 27.06.2002 DE 20209962 U
(71) Anmelder: IN Blechverarbeitungszentrum Sömmerda GmbH, 99610 Sömmerda (DE)
(72) Erfinder: Wellhöfer, Stefan, 99195 Schlossvippach (DE)
(74) Vertreter: Körner, Ekkehard, Dipl.-Ing.

(57) **Zusammenfassung**

Der erfindungsgemäße Ständer für die Halterung von mehreren flachen Kassetten, die Tonträger, Ton-/Bildträger oder andere Datenträger aufnehmen, weist in aufrechter Stellung eine kammartige Struktur mit Vorsprüngen (5) an seiner Vorderseite auf, die einen vorbestimmten Abstand voneinander haben, wobei die Zwischenräume zwischen jeweils zwei Vorsprüngen (5) zur Aufnahme von Kassetten einer bestimmten Dicke dienen, wobei an der nach unten orientierten Seite eines Vorsprungs (5), die einen Zwischenraum nach oben abschließt, eine sich nach unten erstreckende, vorstehende Rippe (9) nahe dem Grund des Zwischenraums derart ausgebildet ist, daß eine dünnere Kassette von der Rippe (9) durch Klemmkräfte festgehalten wird, die durch das Hebelmoment der Kassette hervorgebracht werden.

## Beschreibung

Die vorliegende Erfindung bezieht sich auf einen Ständer für die Halterung von mehreren flachen Kassetten, die Tonträger, Ton-/Bildträger oder andere Datenträger aufnehmen.

Es sind turmartige Ständer dieser Art bekannt, die an ihrer Vorderseite mit einer Vielzahl von Schlitzen versehen sind und so eine kammartige Struktur bilden, in die Kassetten, die CDs, DVDs oder andere Datenträger aufnehmen, eingeschoben werden können. Derartige Ständer sind jedoch in erster Linie für die Aufnahme von Kassetten einer bestimmten Größe ausgelegt. Zu dicke Kassetten können nicht in die Schlitze eingeschoben werden, während zu dünne Kassetten entweder überhaupt keinen Halt finden oder unter einem anderen Winkel als dickere Kassetten aus dem Ständer herausstehen. Daher müssen für unterschiedliche Kassettenarten mehrere unterschiedliche Ständer angeschafft werden.

Der Erfindung liegt die Aufgabe zugrunde, einen Ständer der vorgenannten Art anzugeben, der vielseitig einsetzbar und kostengünstig ist, indem er für mehrere unterschiedliche Kassettengrößen gleichzeitig geeignet und möglichst einfach strukturiert ist, und dabei ein ansprechendes Äußeres zeigt.

Diese Aufgabe wird durch einen Ständer mit den im Anspruch 1 angegebenen Merkmalen gelöst. Vorteilhafte Ausgestaltungen der Erfindung sind Gegenstand der Unteransprüche.

Der erfindungsgemäße Ständer für die Halterung von mehreren flachen Kassetten, die Tonträger, Ton-/Bildträger oder andere Datenträger aufnehmen, weist in aufrechter Stellung eine kammartige Struktur mit Vorsprüngen an seiner Vorderseite auf, die einen vorbestimmten Abstand voneinander haben, wobei die Zwischenräume zwischen jeweils zwei Vorsprüngen zur Aufnahme von Kassetten einer bestimmten Dicke dienen, wobei an der nach unten orientierten Seite eines Vorsprungs, die einen Zwischenraum nach oben abschließt, eine sich nach unten erstreckende, vorstehende Rippe nahe dem Grund des Zwischenraums derart ausgebildet ist, daß eine dünnere Kassette von der Rippe durch Klemmkräfte festgehalten wird, die durch das Hebelmoment der Kassette hervorgebracht werden.

Somit kann beispielsweise in den Zwischenraum zwischen zwei Vorsprüngen die Kassette einer DVD bis zur Rippe eingeschoben werden, während für die Unterbringung von CD-Kassetten, die dünner als die von DVDs sind, der engere Abstand im Bereich der Rippe vorgesehen ist. Im Gebrauch des Ständers stehen die von diesem aufgenommenen Kassetten mehr oder weniger horizontal von diesem frei auskragend vor und werden durch die Klemmkräfte an ihm festgehalten, die durch das Hebelmoment der Kassetten aufgrund deren Schwerkraft hervorgebracht werden. Der Zwischenraum zwischen zwei benachbarten Vorsprüngen ist durch die maximale Dicke der aufzunehmenden Datenträgerkassetten bestimmt.

Der erfindungsgemäße Ständer besteht vorzugsweise aus einem Vorderteil und einem Rückenteil sowie einem Fußteil. Das Vorderteil besteht aus einem starren, elastisch biegbaren ersten Band, in dem mehrere U-förmige Vorsprünge, die sich über die gesamte Breite des Bandes erstrecken, in gegenseitigem Abstand ausgebildet sind. Um dem Vorderteil Stabilität zu verleihen, ist das Rückenteil vorgesehen, das auf der dem Vorderteil zugewandten Seite mit einer Vielzahl querlaufender, vorstehender Leisten versehen ist, die von der Rückseite des Vorderteils her in die von den Schenkeln der Us begrenzten Zwischenräume eingeführt und dort eingeklemmt sind. Das obere Ende dieser Anordnung aus Vorderteil und Rückenteil ist mittels wenigstens eines Zugseiles an dem Fußteil verspannt.

Für den Transport kann die Verspannung gelöst werden, so daß Vorderteil und Rückenteil im wesentlichen flache Elemente sind.

Die vorstehenden Leisten am Rückenteil weisen vorzugsweise jeweils wenigstens eine längslaufende Rippe an einer der Seiten auf, die an die Vorderseite des Rückenteils anschließen. Die Innenseite eines der Schenkel der U-förmigen Vorsprünge ist mit einer dazu passenden Nut versehen, in die die Rippe eingreift. Auf diese Weise ist das Vorderteil an dem Rückenteil an einer Vielzahl von Stellen formschlüssig und rastbar festlegbar.

In vorteilhafter Weiterbildung der Erfindung besteht das Vorderteil aus einer Vielzahl einzelner, aneinander anschließender Segmente, die jeweils nur einige der U-förmigen Vorsprünge, beispielsweise sechs solcher Vorsprünge, ausbilden. Die Segmente schließen in Längserstreckung der segmentierten Bahn, die das Vorderteil bildet, aneinander an. In vorteilhafter Weiterbildung der Erfindung ist der Scheitelbereich eines Vorsprungs am Ende eines solchen Segments im Querschnitt schlüssellochartig ausgebildet, während der Vorsprung am anderen Ende des Segments im Querschnitt schlüsselartig ausgebildet ist. Zwei benachbarte Segmente können dann durch Ineinanderschieben der komplementär ausgebildeten Vorsprünge miteinander formschlüssig verbunden werden. Diese Ausführungsart der Erfindung erlaubt es, die einzelnen Segmente als Strangpressprofil auszubilden, das in Abschnitte zu zerteilen ist, deren Länge der Breite des erfindungsgemäßen Ständers entspricht. Diese Ausführungsart erlaubt es ferner, den Ständer in demontierten Zustand der Segmente kleinvolumig zu verpacken.

In gleicher Weise kann auch das Rückenteil in mehrere Segmente unterteilt sein, die stumpf aneinanderstoßen.

Das Material des Vorderteils ist vorzugsweise Aluminium. Gleiches Material kann auch für das Rückenteil verwendet werden, doch sind in beiden Fällen auch Kunststoffe einsetzbar. Die vorstehenden Leisten am Rückenteil können einstückig mit diesem ausgebildet sein oder können auch gesonderte Bauelemente sein, die mit dem Rückenteil durch Verschraubung, Vernietung, Verklebung oder dergleichen fest verbunden sind.

Die Erfindung wird nachfolgend unter Bezugnahme auf ein in den Zeichnungen dargestelltes vorteilhaftes Ausführungsbeispiel näher erläutert. Es zeigt:
- Fig. 1: eine perspektivische Gesamtansicht des erfindungsgemäßen Ständers;
- Fig. 2: eine Seitenansicht des Ständers von Fig. 1;
- Fig. 3: eine perspektivische Detailansicht des oberen Endabschnitts des Ständers von Fig. 1;
- Fig. 4: eine Darstellung ähnlich Fig. 3 mit einer im Ständer gehaltenen DVD-Kassette und einer im Ständer gehaltenen CD-Kassette;
- Fig. 5: den erfindungsgemäßen Ständer von der Rückseite, und
- Fig. 6: einen Ausschnitt aus dem erfindungsgemäßen Ständer im Querschnitt.

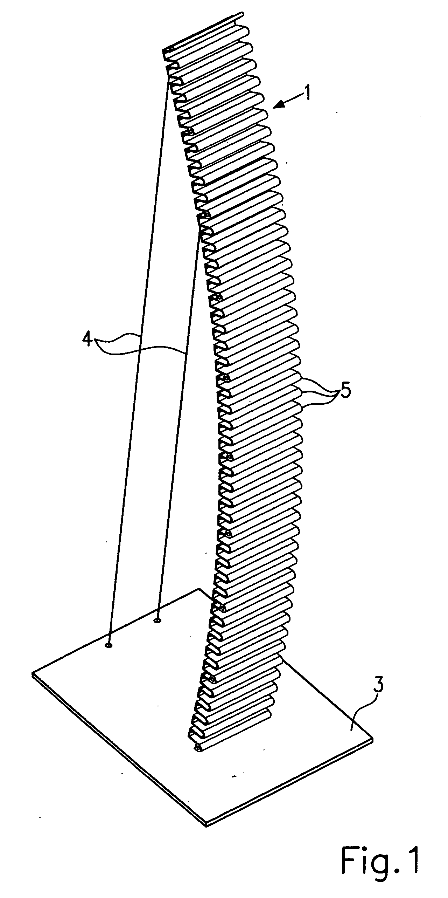

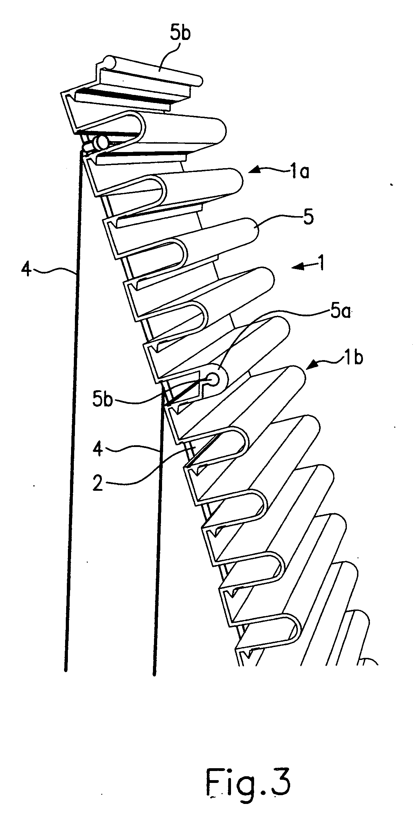

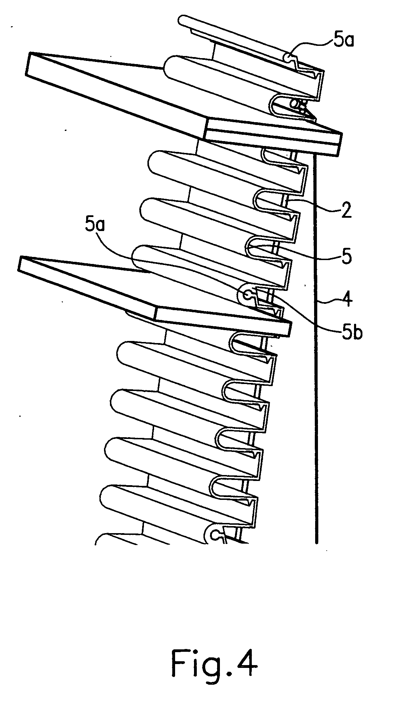

Es wird anschließend in der Gesamtheit auf die Fig. 1 bis 6 Bezug genommen. Der erfindungsgemäße Ständer besteht aus einem Vorderteil 1, einem Rückenteil 2, das in Fig. 3 erkennbar ist, einem Fußteil 3 und einer Verspannung 4, die im dargestellten Beispiel aus zwei Spanndrähten bestehen, die am oberen Ende des Rückenteils 2 und am Fußteil verankert sind und die Anordnung aus Vorderteil und Rückenteil zu einem Bogen spannen. Zur Verankerung der Spanndrähte am oberen Ende des Rückenteils 2 wird insbesondere auf Fig. 4 hingewiesen.

Das Vorderteil 1 besteht aus einem langgestreckten Band, in dem eine Vielzahl von im Querschnitt U-förmigen Vorsprüngen 5 ausgebildet sind. Die Vorsprünge 5 haben einen gegenseitigen Abstand, der so bemessen ist, daß in dem von zwei Vorsprüngen gebildeten schlitzförmigen Zwischenraum eine DVD-Kassette aufgenommen werden kann. Das Prinzip ist aber auf alle möglichen Kassettengrößen anwendbar.

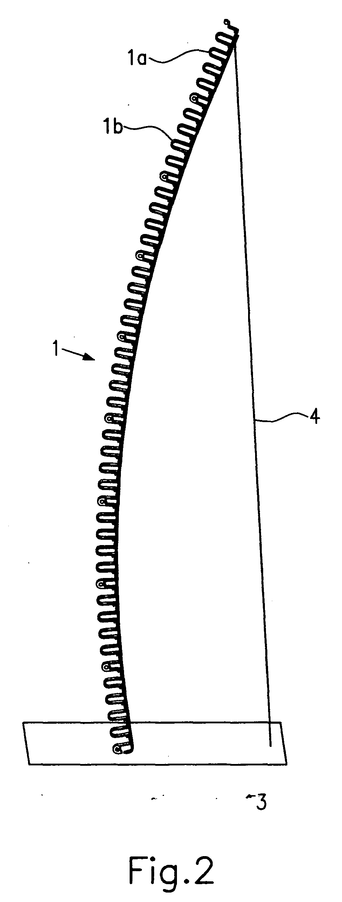

Wie die Fig. 2 und 3 ferner zeigen, besteht das Vorderteil 1 aus mehreren sich in Längsrichtung aneinander anschließenden Segmenten, von denen in Fig. 3 das oberste Segment 1a und ein sich daran anschließendes Segment 1b dargestellt sind. Die Segmente sind formschlüssig miteinander verbunden, indem der eine Vorsprung 5 am unteren Ende des obersten Segments 1a im Querschnitt schlüssellochartig ausgebildet ist und der untere Abschnitt des U-förmigen Vorsprungs fehlt, während der oberste Vorsprung des sich daran anschließenden Segments 1b im Querschnitt schlüsselartig gestaltet ist und jede U-Form vermissen läßt. Wie Fig. 3 deutlich zeigt, sind Schlüssellochquerschnitt und Schlüsselquerschnitt ineinandergeschoben, so daß insgesamt eine formschlüssige Verbindung entsteht und die mit 5a und 5b bezeichneten Vorsprungsabschnitte zusammen sich wieder zu einem U-förmigen Querschnitt ergänzen. Es sind somit an den Verbindungsstellen zweier Segmente quasi Knotenstellen gebildet, die in Fig. 2 sehr deutlich zu erkennen sind. Dort sind acht solcher Knotenstellen dargestellt.

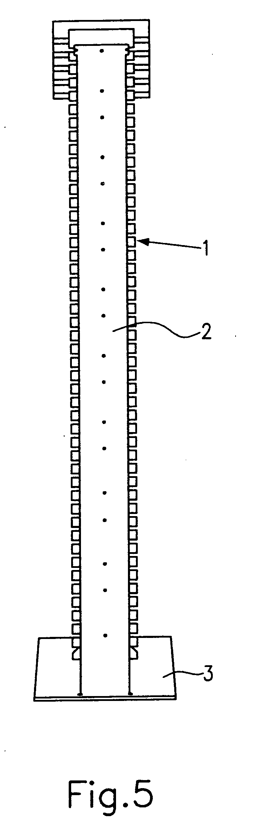

Zur Stabilisierung des Vorderteils 1 ist das Rückenteil 2 vorgesehen. Das Rückenteil 2 kann gemäß Fig. 5 einstückig ausgebildet sein und schmaler als das Vorderteil 1 sein und ist, wie Fig. 2 zeigt, am Fußteil 3 befestigt. Es kann aber auch aus mehreren, aneinander anstoßenden Segmenten bestehen.

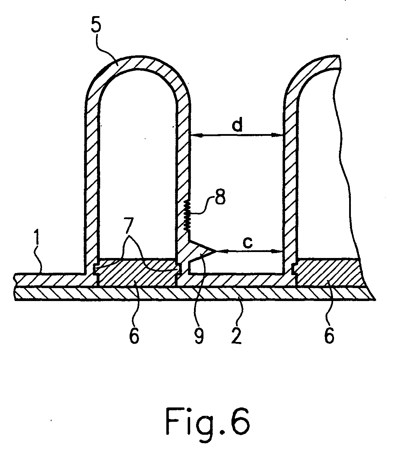

Wie Fig. 6 zeigt, sind an der dem Vorderteil 1 zugewandten Seite des Rückenteils 2 eine Vielzahl von vorstehenden Leisten 6 angebracht, beispielsweise angeschraubt, angenietet oder angeklebt. Diese Leisten 6 sind in die Zwischenräume zwischen den Schenkeln jeweils eines U-förmigen Vorsprungs 5 eingeklemmt. Mehrere dieser Vorsprünge 5 sind nahe dem Fußbereich der Schenkel der U-förmigen Vorsprünge an der Innenseite mit längslaufenden Nuten 7 versehen, und an der zugehörigen Leiste 6 sind entsprechende Rippen ausgebildet, die in diese Nuten 7 eingreifen. Auf diese Weise ist die betreffende Leiste 6 an dem zugehörigen U-förmigen Vorsprung 5 formschlüssig verankert.

Die Leisten 6 bewirken die eigentliche Stabilisierung des Vorderteils 1 durch Verspannung mit Hilfe der Verspannung 4, weil das Vorderteil 1 ansonsten sich wie eine Ziehharmonika elastisch verformen könnte.

Erfindungsgemäß ist der Zwischenraum zwischen zwei benachbarten Vorsprüngen 5, in Fig. 6 mit d bezeichnet, so bemessen, daß beispielsweise eine DVD-Kassette in den von zwei Vorsprüngen 5 gebildeten schlitzförmigen Zwischenraum eingeschoben werden kann. Um einem unbeabsichtigten Herausrutschen vorzubeugen, kann die den Schlitz begrenzende Wand des jeweils oberen U-förmigen Vorsprungs 5 in einem Teilbereich mit einer Zahnung 8 versehen sein.

Um auch andere Kassetten mit geringerer Dicke, etwa für CDs, in dem erfindungsgemäßen Ständer sicher unterbringen zu können, ist nahe dem Grund des Zwischenraums zwischen zwei U-förmigen Vorsprüngen 5 an der diesen nach oben begrenzenden Wand des U-förmigen Vorsprungs 5 eine Rippe 9 ausgebildet, die den Zwischenraum dort auf ein Maß c begrenzt (siehe Fig. 6), das zum losen Einführen, jedoch sicheren Festhalten einer CD-Kassette geeignet ist. Diese Rippe weist im Beispiel einen dreieckigen Querschnitt auf, kann aber jede andere beliebige Form haben, die zur Halterung geeignet ist. Fig. 4 zeigt deutlich die unterschiedlichen Halterungsarten, wobei die in Fig. 4 oben dargestellte Kassette eine DVD-Kassette ist, die bis zum Fuß der Rippe 9 eingeschoben ist, die an dieser Stelle in Fig. 4 nicht mehr zu erkennen ist, während die vier Zwischenräume tiefer angeordnete CD-Kassette von der Rippe 9 gehalten ist und somit geringfügig tiefer in den Ständer hineinreicht. Die Kassetten werden jeweils durch Hebelkräfte in ihrer Position gehalten, die durch ihr Eigengewicht initiiert werden.

## Patentansprüche

1. Ständer für die Halterung von mehreren flachen Kassetten, die Tonträger, Ton-/Bildträger oder andere Datenträger aufnehmen, der in aufrechter Stellung eine kammartige Struktur mit Vorsprüngen (5) an seiner Vorderseite aufweist, die einen vorbestimmten Abstand voneinander haben, wobei die Zwischenräume zwischen jeweils zwei Vorsprüngen (5) zur Aufnahme von Kassetten einer bestimmten Dicke dienen, wobei an der nach unten orientierten Seite eines Vorsprungs (5), die einen Zwischenraum nach oben abschließt, eine sich nach unten erstreckende, vorstehende Rippe (9) nahe dem Grund des Zwischenraums derart ausgebildet ist, daß eine dünnere Kassette von der Rippe (9) durch Klemmkräfte festgehalten wird, die durch das Hebelmoment der Kassette hervorgebracht werden.

2. Ständer nach Anspruch 1, **dadurch gekennzeichnet, daß** die Rippe (9) einen im wesentlichen dreieckigen Querschnitt hat.

3. Ständer nach Anspruch 1 oder 2, **dadurch gekennzeichnet, daß** die Vorsprünge (5) U-förmig ausgebildet sind.

4. Ständer nach einem der vorangehenden Ansprüche, **dadurch gekennzeichnet, daß** die Vorsprünge (5) in einem Vorderteil (1) ausgebildet sind, das mit einem Rückenteil (2) verbunden ist, wobei das Vorderteil (1) aus einem starren, elastisch biegbaren ersten Band besteht und das Rückenteil (2) aus einem starren, elastisch biegbaren zweiten Band.

5. Ständer nach Anspruch 4, **dadurch gekennzeichnet, daß** das Vorderteil (1) und/oder Rückenteil (2) an einem Fußteil (3) befestigt ist, und zusätzlich das obere Ende des Vorderteils (1) und/oder des Rückenteils (2) mittels wenigstens einer Verspannung (4) an dem Fußteil (3) verspannt ist.

6. Ständer nach Anspruch 5, **dadurch gekennzeichnet, daß** Vorderteil (1) und Rückenteil (2) von der wenigstens einen Verspannung (4) zu einem Bogen gespannt sind.

7. Ständer nach einem der Ansprüche 4 bis 6, **dadurch gekennzeichnet, daß** an dem Rückenteil in gegenseitigem Abstand mehrere querlaufende, vorstehende Leisten (6) angeordnet sind, deren in Längsrichtung des zweiten Bandes gesehene Breite an den Zwischenraum zwischen den Schenkeln eines U-förmigen Vorsprungs (5) des ersten Bandes angepaßt ist und die jeweils zwischen die Schenkel der U-förmigen Vorsprünge (5) eingeklemmt sind.

8. Ständer nach Anspruch 7, **dadurch gekennzeichnet, daß** an mehreren der Leisten (6) jeweils an wenigstens einer der mit dem zweiten Band verbundenen Seiten eine längslaufende, vorstehende Rippe ausgebildet ist und an der Innenseite des benachbarten Schenkels des U-förmigen Vorsprungs (5) des Vorderteils (1) eine Nut (7) ausgebildet ist, in die die Rippe eingreift.

9. Ständer nach einem der vorhergehenden Ansprüche, **dadurch gekennzeichnet, daß** das Vorderteil (1) aus mehreren, sich in Längsrichtung des Vorderteils (1) aneinander anschließenden Segmenten (1a, 1b) besteht, die formschlüssig im Bereich der Scheitel der U-förmigen Vorsprünge (5) miteinander verbunden sind.

10. Ständer nach Anspruch 9, **dadurch gekennzeichnet, daß** an der Verbindungsstelle zweier Segmente ein Vorsprung (5a) des einen Segments (1a) ein unvollständiges U mit einer im Querschnitt schlüssellochförmigen Öffnung ausbildet und der benachbarte Vorsprung (5b) des sich anschließenden Segments (1b) im Querschnitt schlüsselartig ausgebildet ist und die beiden Segmente durch Ineinanderschieben der in dieser Weise komplementär ausgebildeten Vorsprünge (5a, 5b) miteinander verbunden sind, wobei im Zwischenraum zwischen den Schenkeln des Vorsprungs am Fuß desselben eine der Leisten (6) des Rückenteils (2) eingeklemmt ist.
